(19) Europäisches Patentamt
European Patent Office
Office européen des brevets

(11) **EP 1 704 652 B1**

(12) **EUROPEAN PATENT SPECIFICATION**

(45) Date of publication and mention
of the grant of the patent:
**26.12.2012 Bulletin 2012/52**

(21) Application number: **05706851.2**

(22) Date of filing: **10.01.2005**

(51) Int Cl.:
***H04B 1/707*** (2011.01)

(86) International application number:
**PCT/EP2005/000131**

(87) International publication number:
**WO 2005/069501 (28.07.2005 Gazette 2005/30)**

(54) **METHOD OF AND APPARATUS FOR COMPUTATION OF UNBIASED POWER DELAY PROFILE**

VERFAHREN UND VORRICHTUNG ZUR BERECHNUNG EINES NEUTRALEN LEISTUNGSVERZÖGERUNGSPROFILS

PROCEDE ET APPAREIL DE CALCUL DE PROFIL D'UN RETARD DE PUISSANCE NON POLARISEE

(84) Designated Contracting States:
**AT BE BG CH CY CZ DE DK EE ES FI FR GB GR HU IE IS IT LI LT LU MC NL PL PT RO SE SI SK TR**

(30) Priority: **12.01.2004 US 755760**
**12.01.2004 US 755803**

(43) Date of publication of application:
**27.09.2006 Bulletin 2006/39**

(73) Proprietor: **Telefonaktiebolaget LM Ericsson (publ)**
**164 83 Stockholm (SE)**

(72) Inventor: **REIAL, Andres**
**S-222 41 Lund (SE)**

(74) Representative: **Åkerman, Mårten Lennart et al**
**Ericsson AB**
**Patent Unit Mobile Platforms**
**Nya Vattentornet**
**221 83 Lund (SE)**

(56) References cited:
**EP-A- 1 065 801    EP-A- 1 276 248**

**Description**

**BACKGROUND**

**Technical Field**

The invention relates to digital wireless communications systems in which delays of individual multi-path components of a time-varying fading channel are to be estimated. The digital wireless communications systems may include, for example, systems using Code Division Multiple Access (CDMA) RAKE receivers. The invention relates in particular to improving robustness of detection of new multi-path components in a radio propagation channel, as well as of tracking known paths, by reliably indicating a proper position for a path searcher window.

**History of Related Art**

In wireless communications, a physical channel between a transmitter and a receiver is formed via a radio link. In most cases, no antenna of the transmitter is narrowly focused towards the receiver. In addition to a possible direct path, many other propagation paths often exist between the transmitter and the receiver. The other propagation paths typically result from reflections from objects near the transmitter or the receiver. Rays with similar propagation distances combine at the receiver, depending on an instantaneous phase relationship, and form a distinct multi-path component. The effect of a combination of the rays depends on the instantaneous phase relationship of a carrier wavelength and also on distance differences among the rays. In the case of destructive interference, the combination of the rays leads to a significant decrease in path-gain magnitude (i.e., fading).

Performance of a CDMA receiver is improved if signal energy carried by many multi-path components is utilized. A desired improvement in CDMA receiver performance may be achieved via a RAKE receiver. In the RAKE receiver, each of a plurality of multi-path components is assigned a despreader (i.e., RAKE finger). Each of the plurality of despreaders is assigned a reference copy of a spreading code. Each of the spreading-code reference copies is delayed in time by an amount equal to a path delay of a corresponding multi-path component. Outputs of the respective despreaders are then coherently combined via a RAKE combiner to produce a symbol estimate.

The RAKE receiver preferably uses knowledge of the multi-path delays and channel-impulse values for all detected paths. To achieve a best possible signal-to-noise ratio at an output of the RAKE combiner, signal energy from as many physical paths as possible should be collected. In addition, tracking as many different physical paths as possible (i.e., maximal utilized diversity) significantly improves signal-reception robustness, since the probability of a simultaneous deep fade of all paths is reduced. Simultaneous deep fade of all paths is a phenomenon that typically leads to serious block-error-rate (BLER) degradation.

A propagation channel structure (i.e., absolute and relative delays of the individual multi-path components) does not typically remain constant over time. Due to relative movement of the transmitter, the receiver, and nearby objects, delays of existing paths may change, old paths may disappear, and new paths may appear. In addition, a frequency offset between respective circuits of the transmitter and the receiver gives rise to a clock drift. The clock drift generally manifests itself as a gradual time-axis movement of the entire delay profile. To ensure proper operation of the RAKE receiver, the changing delays of all known multi-path components should be tracked and new paths should be discovered quickly after the new paths appear.

Due to the physical channel structure, in most cases relative positions of the nearby objects change. Thus, path lengths of the new paths usually do not differ significantly from path lengths of the existing paths. The macro-structure of the channel (e.g., mountains or groups of buildings that cause signal reflections) changes relatively rarely. Therefore, most often, the delays of the new paths are relatively similar to those of the existing, known, paths. Therefore, the delays of the new paths may be detected by searching in a delay domain near the known delays of the existing paths.

European Patent Application EP-A-1 065 801 discloses an adaptive path searcher in a CDMA receiver. The true path of a transmission channel is selected by comparing the profile energy with a threshold, which is dynamically determined as a function of the mean of the noise and interference paths derived from the transmission channel estimation.

European Patent Application EP-A-1 276 248 discloses a method of search window delay tracking in a CDMA receiver. A channel impulse response is estimated for a received signal containing plural paths, each having a corresponding path delay. A search widow defines a delay profile that contains the plural paths of the received signal. A mean or average delay is calculated for the estimated channel impulse response (CIR), and an error is determined between the mean CIR delay and a desired target delay position of the CIR search window. An adjustment is made to reduce that error to align the targeted position of the search window and the mean CIR delay. A Doppler frequency is estimated for each path. The adjustment is made taking into account a Doppler effect caused by relative movement between the transmitter and the receiver.

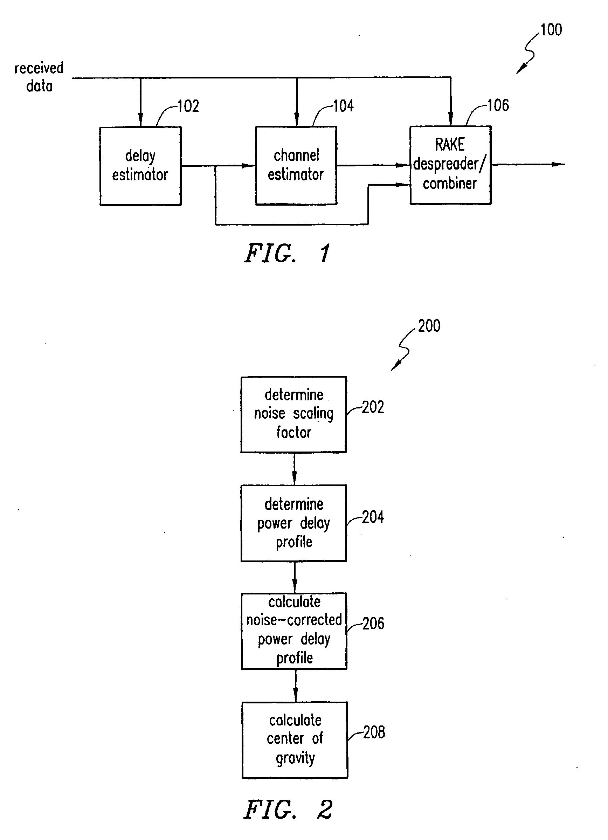

FIGURE 1 is a block diagram of a typical RAKE receiver. A RAKE receiver 100 includes a delay estimator block 102, a channel estimator block 104, and a RAKE despreader/combiner block 106. Received data are fed to the delay estimator block 102. The delay estimator block 102 evaluates an impulse response of a channel over a range of possible delays of the channel. A resulting delay profile, which may be a complex delay profile or a power delay profile, may then be subjected to peak detection and detected peak locations reported to the RAKE despreader/combiner block 106 as delay estimates for the multi-path components. The delay estimates are also used by the channel estimator block 104 to estimate corresponding complex channel coefficients by despreading a pilot sequence and possibly filtering results over time to reduce the effects of noise and interference. Channel parameters are estimated in collaboration between the delay estimator block 102, which determines temporal alignment of a despreader portion of the RAKE despreader/ combiner block 106, and the channel estimator block 104, which estimates the complex coefficients to be used by a combiner portion of the RAKE despreader/combiner block 106. A noise-plus-interference power estimate is also made.

A simple approach to delay estimation involves evaluating an impulse response of a channel over an entire range of possible delays (i.e., maximal assumed delay spread) of the channel. A resulting complex delay profile or power delay profile may then be subjected to peak detection and detected peak locations reported by the delay estimator block 102 to the channel estimator block 104 and the RAKE despreader/combiner block 106 as delay estimates. However, processing and power-consumption expenses of frequent execution of a full path-searching routine are usually prohibitive. Therefore, typical implementations use path searchers with observation windows shorter than the full search area (i.e., a maximal assumed delay spread). In addition, for any practical delay estimation, a path search is periodically undertaken to re-scan the delay range with the purpose of detecting new paths.

A delay-estimation algorithm employed by the delay estimator block 102 extracts the path positions and finds the power delays with sufficient accuracy once the path positions have been discovered by the path searcher. A path-searcher window is positioned so that new paths are included within the path-searcher window. Since it is known with sufficient probability that the new paths will appear in the vicinity, in terms of the paths' respective delays, of the currently-known paths, the path-searcher window is usually placed so as to cover the currently-known paths.

An estimate $g(\tau_i)$ of a current power delay profile for delays $\tau_i$ ($i \in [1, M]$) typically includes a set of recently-detected or currently-tracked paths, in which case the delays $\tau_i$ are usually not contiguous. $g(\tau_i)$ may also represent a contiguous region ($\tau_i = \tau_0 + i\Delta\tau$) over which the path search is conducted. Other ways of representing the power delay profile are also possible.

A suitable start position $I$ for a path searcher window of length $N_w$ needs to be determined. A typically-used method for determining a suitable path-searcher window start position for a next path-searcher activation is based on computing a center of gravity (i.e., mean excess delay) of the presently-known power-delay-profile estimate. A center-of-gravity position estimate $C$ is computed as follows:

$$C = \frac{\sum_i \tau_i g(\tau_i)}{\sum_i g(\tau_i)} \tag{1}$$

Given $C$, the path-searcher window is placed so that most of the channel power is covered by the window. Because of space loss, a typical shape of the power delay profile exhibits exponential decay, such that the energy is concentrated towards the beginning of the region of interest. For reasonable coverage, the window can be placed, for example, 1/3

$$I = C - \frac{N_w}{3}$$

ahead of and 2/3 behind the value of $C$ (i.e., ).

In the case of a compact true power delay profile and a high receiver signal-to-noise ratio, $C$ gives a consistent and reliable estimate of the true energy concentration in the channel. However, when the energy in the channel is distributed over a wide delay spread and when the signal-to-noise ratio of the power delay profile is poor, $C$ is not so reliable. The noise-induced component of $g(\tau_i)$ causes a bias term that shifts the result of $C$ towards an average non-power-weighted delay of all entries of the power delay profile. The size of the bias term depends on how far from each other the true center of gravity and the average delay are separated and also depends on the signal-to-noise ratio. In many practical cases, the bias term is large enough to shift the path-searcher window away from significant portions of the true power delay profile.

To counteract noise-induced bias effects, $g(\tau_i)$ may be thresholded, which removes a portion of the noise-only samples and reduces bias. However, efficient noise removal assumes the use of a rather high threshold, which may also remove channel components from, and thus distort, the power delay profile.

The noise effect may also be reduced by noise subtraction, where average noise power $\sigma_g^2$ in the power delay profile is estimated. Instead of $g(\tau_i)$- $\sigma_g^2$ is used in the center-of-gravity computation. In a typical implementation, the center-of-gravity computation is based on a coarse power-delay-profile estimate over a range of $N_w$ delay values. The positions of the $N_p$ largest peaks of that power delay profile are taken as the delay values $\tau_i$. The noise floor $\sigma_g^2$ is estimated by averaging the $N_n = N_w - N_p$ smallest power-delay-profile values. However, this approach severely under-estimates $\sigma_g^2$. Since the noise floor is not removed completely, significant residual bias effect remains. To improve the robustness and precision of the center-of-gravity computation and of the resulting path-searcher window placement, an approach is needed that more adequately removes the noise floor from center-of-gravity computations.

## SUMMARY OF THE INVENTION

Embodiments of the present invention provide a method of and apparatus for computation of an unbiased power delay profile. A method of determining a noise-corrected power delay profile includes determining a power delay profile and calculating a noise-corrected power delay profile. The step of calculating the noise-corrected power delay profile includes using a biased noise-floor power estimate, the power delay profile, and a noise-scaling factor.

An apparatus for determining a noise-corrected power delay profile includes a channel estimator, a despreader, and a delay estimator. The delay estimator is interoperably connected to the channel estimator and the despreader. The delay estimator is for determining a power delay profile and calculating a noise-corrected power delay profile. The step of calculating the noise-corrected power delay profile includes using a biased noise-floor power estimate, the power delay profile, and a noise-scaling factor.

## BRIEF DESCRIPTION OF THE DRAWINGS

A more complete understanding of exemplary embodiments of the present invention can be achieved by reference to the following Detailed Description of Exemplary Embodiments of the Invention when taken in conjunction with the accompanying Drawings, wherein:

FIG. 1, previously described, is a block diagram of a typical RAKE receiver;
FIG. 2 is a flow diagram that illustrates calculation of a center-of-gravity position estimate in accordance with principles of the present invention; and
FIG. 3 is a graph that illustrates exemplary values of a noise-scaling factor in accordance with principles of the invention.

## DETAILED DESCRIPTION OF EXEMPLARY EMBODIMENTS OF THE INVENTION

Embodiments of the invention permit an unbiased center-of-gravity position estimate to be calculated given a set of $N_w$ power-delay-profile values. The center-of-gravity position estimate is computed from a subset of the power-delay-profile values. The subset may be, for example, the $N_p$ largest peaks. A noise floor component is removed from the $N_p$ peaks before the center-of-gravity position estimate is computed. A noise floor power is computed by averaging a subset of the power-delay-profile values. The subset of the power-delay-profile values may be, for example, the $N_n$ smallest values. A noise-scaling factor $\gamma$ is introduced into the center-of-gravity position estimate. The noise-scaling factor, which converts the biased noise floor power into an unbiased value, is computed based on a probability distribution of the noise component and on $N_w$, $N_p$, and $N_n$. As a result, the computed center-of-gravity position estimate is substantially unbiased and the path-searcher window is positioned with the best likelihood of covering all the paths included in the power delay profile. FIG. 2 is a flow diagram that illustrates calculation of a center-of-gravity position estimate $C$ in accordance with principles of the present invention. A flow 200 begins at step 202, at which step a noise-scaling factor $\gamma$ is determined. The noise-scaling factor $\gamma$ may be determined offline and utilized online by the delay estimator block 102 in determining the center-of-gravity position estimate $C$. At step 204, a power delay profile $g_m$ is determined. At step 206, a noise-corrected power delay profile is calculated using a biased noise-floor power estimate $\sigma_g^2$, the noise-sealing factor $\gamma$, and the power delay profile $g_m$. At step 208, the center-of-gravity position estimate $C$ is calculated using the noise-corrected power delay profile.

A path searcher processes a window of length $N_w$ (e.g., chips) and, at each nth activation, the power delay profile $g_m$ is estimated, with $m \in [m_0, m_0 + N_w - 1]$. Out of the power delay profile, $N_p$ peaks (specifically delays $\tau_k$ and powers $h_k$ for $k = 1... N_p$) are detected and reported. Let $h_k = p_k + n_k$, where $p_k$ is the actual path power after power-delay-profile accumulation and $n_k$ is a residual noise plus an interference component. The power-delay-profile noise-floor power estimate $\sigma_g^2$ based on the $N_n$ lowest power-delay-profile samples is also available. Traditionally, the center-of-gravity position estimate C is computed based on the reported delays and noise-corrected powers as indicated in equation (2) below.

$$\tau^{(n)} = \frac{\sum_{k=1}^{N_p} \tau_k \left( h_k - \sigma_g^2 \right)}{\sum_{k=1}^{N_p} \left( h_k - \sigma_g^2 \right)} \qquad (2)$$

The noise floor power $Z = \sigma_g^2$ is estimated as the mean of the $N_n$ smallest power-delay-profile samples. However, the noise included in a selected peak set $\{h_k\}$, $k = 1... N_p$, does not have the same distribution as the smallest $N_n$ samples. In the most troublesome cases, when there are many noise samples and few or no true paths, $\{h_k\}$ contains all the largest noise samples whose mean power (denoted by $Z^*$) is significantly larger than the average power of the remaining noise floor. The $n_k$ are well-modeled as magnitude squares of complex Gaussian random variables. In other words, the $n_k$ have the $\chi_2^2$-distribution with the probability density function $f(x) = \dfrac{1}{\sqrt{2\pi x}\,\sigma_g} e^{-\frac{x}{2\sigma_g^2}}$. We can thus express

$$Z = \frac{\int_0^\alpha x f(x)\,dx}{N_n / N_w}$$

(corresponding to the near-zero portion of the probability density function) and

$$Z^* = \frac{\int_\beta^\infty x f(x)\,dx}{N_p / N_w}$$

(corresponding to the tail of the probability density function), where the integration limits $\alpha$ and $\beta$ are defined so that

$$\int_\beta^\infty f(x)\,dx = \frac{N_p}{N_w} \quad \text{and} \quad \int_0^\alpha f(x)\,dx = \frac{N_n}{N_w} \ .$$

The noise-scaling factor $\gamma$ is then determined as the following ratio:

$$\gamma = \frac{Z^*}{Z} \qquad (3)$$

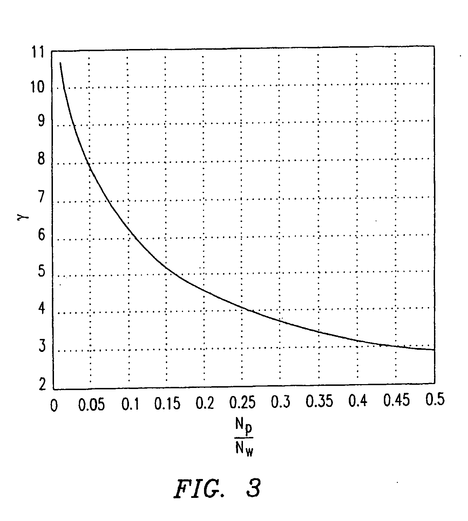

FIG. 3 is a graph that illustrates exemplary values of $\gamma$ as a function of $\dfrac{N_p}{N_w}$, assuming a typical value of $\dfrac{N_n}{N_w}$ of 0.8. It is apparent from FIG. 3 that, in the example shown therein, using Z directly for noise correction underestimates the relevant noise power Z* by a factor of approximately 4-8. In other words, only approximately 12-25% of the noise power is removed.

It may be shown that the expected bias of the center-of-gravity value equals

$$E[C_{true} - C] = \left( C_{true} - \frac{N_w}{2} \right) \frac{N_w E[n_k - \gamma Z]}{\sum_{k=1}^{N_p} p_k}$$

where $C_{true}$ is the actual center of gravity. Noise removal may be achieved by minimizing $E[n_k -\gamma Z]$. Bias would in fact be removed if the true $\gamma Z = En_k$ could be used, Equation (3) representing a practical estimate of such a $\gamma$. As shown, the bias is removed by embodiments of the invention when a noise-scaling factor $\gamma$ is introduced into the center-of-gravity calculation as follows:

$$C = \frac{\sum_{k=1}^{N_p} \tau_k (h_k - \gamma Z)}{\sum_{k=1}^{N_p} (h_k - \gamma Z)} \qquad (4)$$

The noise-scaling factor $\gamma$ may be determined in advance, thus avoiding on-line computations. The denominator of equation (4) directly yields the unbiased signal power estimate $P_i$, wherein

$$P_i = \sum_{k=1}^{N_p} h_k - N_p \gamma Z \qquad (5)$$

and equation (5) may be utilized in other parts of the path-searcher algorithm.

The value of $\gamma$ based on a fixed argument $\dfrac{N_p}{N_w}$ may differ from the optimal value when there are many actual paths and fewer noise-only entries within the observation window. The optimal noise-scaling factor is

$$\gamma' = \frac{N_{paths} + \gamma(N_p - N_{paths})}{N_p} \qquad (6)$$

where $N_{paths}$ is the number of true paths among the $N_p$ selected peaks. When the value of $\gamma$ differs from the optimal value due to many actual paths and fewer noise-only entries, an over-correction results in residual bias in the opposite direction to remain. However, the ratio $\dfrac{N_w E[n_k - \gamma Z]}{\sum_{k=1}^{N_p} p_k}$, and correspondingly any center-of-gravity bias, is kept small. In high-noise cases, practical tests indicate a good model match and removal of almost all of the bias.

Embodiments of the invention permit the actual noise floor of the observed power delay profile included in the center-of-gravity computation to be determined, based on a noise floor estimate derived from the partial noise distribution. As a result, the calculated center-of-gravity value is unbiased or has a significantly reduced bias, improving the robustness of the window placement. In addition, the instantaneous center-of-gravity value calculated in accordance with principles of the invention may be time averaged or combined with other center-of-gravity values from other time or space points without incurring any bias-related errors and without requiring heuristic selection steps.

Embodiments of the invention are computationally efficient, in that typically only one table lookup and one multiplication, in addition to the conventional center-of-gravity computation, are required. Given the relatively-infrequent computation of the path-searcher window position, the computational premium is usually negligible.

As will be appreciated by those having skill in the art, the invention may take many embodiments. For example, embodiments of the invention may be used when other combinations of the number of peaks and the number of noise samples are used (e.g., so that $N_p + N_n \neq N_w$). In such cases, computation of the noise-scaling factor will then be numerically different; however, implementation details will be obvious to a person skilled in the art. In addition, principles of the invention may be employed in any applications in which the center-of-gravity needs to be computed. A complex delay profile may be used instead of a power delay profile, in which case the power of each delay profile element is found by multiplying the complex coefficient by its complex conjugate. Either an averaged or an instantaneous power delay profile may be used.

Although embodiment(s) of the present invention have been illustrated in the accompanying Drawings and described in the foregoing Detailed Description, it will be understood that the present invention is not limited to the embodiment(s) disclosed, but is capable of numerous rearrangements, modifications, and substitutions without departing from the invention defined by the following claims.

## Claims

1.  A method of determining a noise-corrected power delay profile, the method comprising:

    determining a power delay profile (204);
    calculating a noise-corrected power delay profile (206) utilizing a biased noise-floor power estimate, the power delay profile, and a noise-scaling factor; and **characterised by**
    calculating a center-of-gravity position estimate (208) utilizing the noise-corrected power delay profile.

2.  The method of claim 1, wherein the noise-scaling factor (202) is applied to the noise-floor power estimate.

3.  The method of claim 2, wherein the noise-scaling factor is dependent upon a probability density function.

4.  The method of claim 3, wherein the noise-scaling factor is dependent upon a probability density function of the biased noise-floor power estimate.

5.  The method of claim 1, wherein:

    the step of determining the power delay profile comprises using a first plurality of values; and
    the step of calculating the noise-corrected power delay profile comprises using the first plurality of values and a second plurality of values.

6.  The method of claim 5, wherein:

    the first plurality of values is a plurality of power-delay-profile values $N_p$; and
    the second plurality of values is the $N_n$ smallest power-delay-profile values.

7.  The method of claim 1, wherein:

    Z is the biased noise-floor power estimate;
    $\tau_k$ is a time delay;
    $\gamma$ is the noise-scaling factor;
    $h_k$ is a plurality of power values;
    $N_p$ is a plurality of the plurality of power values $h_k$; and
    the center-of-gravity position estimate is

$$\frac{\sum_{k=1}^{N_p} \tau_k (h_k - \gamma Z)}{\sum_{k=1}^{N_p} (h_k - \gamma Z)}.$$

**8.** The method of claim 1, wherein:

$Z$ is the biased noise-floor power estimate;
$\gamma$ is the noise-scaling factor;
$h_k$ is a plurality of power values; and
the noise-corrected power delay profile is $h_k - \gamma Z$

**9.** The method of claim 1, wherein:

$\sigma_g^2$ is the biased noise-floor power estimate;
$Z^*$ is a mean power of a plurality of values $h_k$;
$\gamma$ is the noise-scaling factor; and

$$\gamma = \frac{Z^*}{\sigma_g^2}.$$

**10.** The method of claim 1, wherein:

$\gamma'$ is the noise-scaling factor;

$$\gamma' = \frac{N_{paths} + \gamma(N_p - N_{paths})}{N_p};$$

$N_p$ is a plurality of power values;
$N_{paths}$ is a number of true paths among the $N_p$ power values;

$\sigma_g^2$ is the biased noise-floor power estimate;
$Z^*$ is a mean power of a plurality of power values $...N_n$; and

$$\gamma = \frac{Z^*}{\sigma_g^2}.$$

**11.** The method of claim 1, further comprising:

determining the noise-scaling factor;
storing the noise-scaling factor for on-line use; and
wherein the step of determining the noise-scaling factor is performed offline and before the steps of determining the power delay profile, calculating the noise-corrected power delay profile, and calculating the center-of-gravity position estimate.

**12.** An apparatus for determining a noise-corrected power delay profile, the apparatus comprising:

a channel estimator (104);
a despreader (106); and
a delay estimator (102) interoperably connected to the channel estimator and the despreader, the delay estimator for:

determining a power delay profile (204);

calculating a noise-corrected power delay profile (206) utilizing a biased noise-floor power estimate, the power delay profile, and a noise-scaling factor; and **characterised by**
calculating a center-of-gravity position estimate (208) utilizing the noise-corrected power delay profile.

13. The apparatus of claim 12, wherein the noise-scaling factor (202) is applied to the biased noise-floor power estimate.

14. The apparatus of claim 13, wherein the noise-scaling factor is dependent upon a probability density function.

15. The apparatus of claim 14, wherein the noise-scaling factor is dependent upon a probability density function of the biased noise-floor power estimate.

16. The apparatus of claim 12, wherein:

the delay estimator utilizes a first plurality of values to determine the power delay profile; and
the delay estimator utilizes the first plurality of values and a second plurality of values to calculate the noise-corrected power delay profile.

17. The apparatus of claim 16, wherein:

the first plurality of values is a plurality of power-delay-profile values $N_p$; and
the second plurality of values is the $N_n$ smallest power-delay-profile values.

18. The apparatus of claim 12, wherein:

$Z$ is the biased noise-floor power estimate;
$\tau_k$ is a time delay;
$\gamma$ is the noise-scaling factor;
$h_k$ is a plurality of power values;
$N_p$ is a plurality of the plurality of power values $h_k$; and
the center-of-gravity position estimate is

$$\frac{\sum_{k=1}^{N_p} \tau_k \, (h_k - \gamma Z)}{\sum_{k=1}^{N_p} (h_k - \gamma Z)} \,.$$

19. The apparatus of claim 12, wherein:

$Z$ is the biased noise-floor power estimate;
$\gamma$ is the noise-scaling factor;
$h_k$ is a plurality of power values; and
the noise-corrected power delay profile is $h_k - \gamma Z$.

20. The apparatus of claim 12, wherein:

$\sigma_g^2$ is the biased noise-floor power estimate;
$Z^*$ is a mean power of a plurality of values $h_k$;
$\gamma$ is the noise-scaling factor; and

$$\gamma = \frac{Z^*}{\sigma_g^2} \,.$$

21. The apparatus of claim 12, wherein:

$\gamma'$ is the noise-scaling factor;

$$\gamma' = \frac{N_{paths} + \gamma(N_p - N_{paths})}{N_p};$$

$N_p$ is a plurality of power values;

$N_{paths}$ is a number of true paths among the N.sub.p power values;

$\sigma_g^2$ is the biased noise-floor power estimate;

$Z^*$ is a mean power of a plurality of power values N.sub.n; and

$$\gamma = \frac{Z^*}{\sigma_g^2}.$$

**22.** The apparatus of claim 12, wherein the delay estimator also includes:

means for determining the noise-scaling factor; and
means for storing the noise-scaling factor for on-line use;
wherein the means for determining the noise-scaling factor determines the noise-scaling factor offline before determining the power delay profile, calculating the noise-corrected power delay profile, and calculating the center-of-gravity position estimate.

**Patentansprüche**

**1.** Verfahren zur Bestimmung eines rauschkorrigierten Leistungsverzögerungsprofils, wobei das Verfahren umfasst:

Bestimmen eines Leistungsverzögerungsprofils (204);
Berechnen eines rauschkorrigierten Leistungsverzögerungsprofils (206) unter Verwendung einer durch Grundrauschen beeinflussten Leistungsschätzung, des Leistungsverzögerungsprofils und eines Rauschskalierungsfaktors; und
**gekennzeichnet durch**
Berechnen einer Schwerpunktlageschätzung (208) unter Verwendung des rauschkorrigierten Leistungsverzögerungsprofils.

**2.** Verfahren nach Anspruch 1, wobei der Rauschskalierungsfaktor (202) auf die Grundrauschen-Leistungsschätzung angewendet wird.

**3.** Verfahren nach Anspruch 2, wobei der Rauschskalierungs faktor von einer Wahrscheinlichkeitsdichtefunktion abhängt.

**4.** Verfahren nach Anspruch 3, wobei der Rauschskalierungsfaktor von einer Wahrscheinlichkeitsdichtefunktion der durch Grundrauschen beeinflussten Leistungsschätzung abhängt.

**5.** Verfahren nach Anspruch 1, wobei:

der Schritt des Bestimmens des Leistungsverzögerungsprofils ein Verwenden einer ersten Mehrzahl von Werten umfasst; und
der Schritt des Berechnens des rauschkorrigierten Leistungsverzögerungsprofils ein Verwenden der ersten Mehrzahl von Werten und einer zweiten Mehrzahl von Werten umfasst.

**6.** Verfahren nach Anspruch 5, wobei:

die erste Mehrzahl von Werten eine Mehrzahl von Leistungsverzögerungsprofilwerten $N_p$ ist; und
es sich bei der zweiten Mehrzahl von Werten um die $N_n$ kleinsten Leistungsverzögerungsprofilwerte handelt.

7. Verfahren nach Anspruch 1, wobei:

Z die durch Grundrauschen beeinflusste Leistungsschätzung ist;
$\tau_k$ eine Zeitverzögerung ist;
$\gamma$ der Rauschskalierungsfaktor ist;
$h_k$ eine Mehrzahl von Leistungswerten ist;
$N_p$ eine Mehrzahl der Mehrzahl $\dfrac{\sum_{k=1}^{N_p} \tau_k (h_k - \gamma Z)}{\sum_{k=1}^{N_p} (h_k - \gamma Z)}$ $h_k$ ist; und

die Schwerpunktlageschätzung $\dfrac{\sum_{k=1}^{N_p} \tau_k (h_k - \gamma Z)}{\sum_{k=1}^{N_p} (h_k - \gamma Z)}$ ist.

8. Verfahren nach Anspruch 1, wobei:

Z die durch Grundrauschen beeinflusste Leistungsschätzung ist;
$\gamma$ der Rauschskalierungsfaktor ist;
$h_k$ eine Mehrzahl von Leistungswerten ist; und
das rauschkorrigierte Leistungsverzögerungsprofil $h_k - \gamma Z$ ist.

9. Verfahren nach Anspruch 1, wobei:

$\sigma_z^2$ die durch Grundrauschen beeinflusste Leistungsschätzung ist;
Z* eine mittlere Leistung einer Mehrzahl von Werten $h_k$ ist;
$\gamma$ der Rauschskalierungsfaktor ist; und

$$\gamma = \frac{Z^*}{\sigma_z^2}.$$

10. Verfahren nach Anspruch 1, wobei:

$\gamma'$ der Rauschskalierungsfaktor ist;

$$\gamma' = \frac{N_{paths} + \gamma(N_p - N_{paths})}{N_p};$$

$N_p$ eine Mehrzahl von Leistungswerten ist;
$N_{paths}$ eine Anzahl von wahren Pfaden unter den $N_p$ Leistungswerten ist;

$\sigma_z^2$ die durch Grundrauschen beeinflusste Leistungsschätzung ist;
Z* eine mittlere Leistung einer Mehrzahl von Leistungswerten $N_n$ ist; und

$$\gamma = \frac{Z^*}{\sigma_z^2}.$$

11. Verfahren nach Anspruch 1, ferner aufweisend:

Bestimmen des Rauschskalierungsfaktors;
Speichern des Rauschskalierungsfaktors zur Online-Verwendung; und
wobei der Schritt des Bestimmens des Rauschskalierungsfaktors offline und vor den Schritten des Bestimmens des Leistungsverzögerungsprofils, Berechnens des rauschkorrigierten Leistungsverzögerungsprofils und Berechnens der Schwerpunktlageschätzung ausgeführt wird.

12. Vorrichtung zum Bestimmen eines rauschkorrigierten Leistungsverzögerungsprofils, wobei die Vorrichtung umfasst:

ein Kanalschätzer (104);
einen Entspreizer (106); und
einen Verzögerungsschätzer (102), der gemeinsam betreibbar mit dem Kanalschätzer und dem Entspreizer verbunden ist, wobei der Verzögerungsschätzer ist zum:

Bestimmen eines Leistungsverzögerungsprofils (204);
Berechnen eines rauschkorrigierten Leistungsverzögerungsprofils (206) unter Verwendung einer durch Grundrauschen beeinflussten Leistungsschätzung, des Leistungsverzögerungsprofils und eines Rauschskalierungsfaktors; und **gekennzeichnet durch**
Berechnen einer Schwerpunktlageschätzung (208) unter Verwendung des rauschkorrigierten Leistungsverzögerungsprofils.

13. Vorrichtung nach Anspruch 12, wobei der Rauschskalierungsfaktor (202) auf die durch Grundrauschen beeinflusste Leistungsschätzung angewendet wird.

14. Vorrichtung nach Anspruch 13, wobei der Rauschskalierungs faktor von einer Wahrscheinlichkeitsdichtefunktion abhängt.

15. Vorrichtung nach Anspruch 14, wobei der Rauschskalierungsfaktor von einer Wahrscheinlichkeitsdichtefunktion der durch Grundrauschen beeinflussten Leistungsschätzung abhängt.

16. Vorrichtung nach Anspruch 12, wobei:

der Verzögerungsschätzer eine erste Mehrzahl von Werten zum Bestimmen des Leistungsverzögerungsprofils verwendet; und
der Verzögerungsschätzer die erste Mehrzahl von Werten und eine zweite Mehrzahl von Werten zum Berechnen des rauschkorrigierten Leistungsverzögerungsprofils verwendet.

17. Vorrichtung nach Anspruch 16, wobei:

die erste Mehrzahl von Werten eine Mehrzahl von Leistungsverzögerungsprofilwerten $N_p$ ist; und
es sich bei der zweiten Mehrzahl von Werten um die $N_n$ kleinsten Leistungsverzögerungsprofilwerte handelt.

18. Vorrichtung nach Anspruch 12, wobei:

Z die durch Grundrauschen beeinflusste Leistungsschätzung ist;
$\tau_k$ eine Zeitverzögerung ist;
$\gamma$ der Rauschskalierungsfaktor ist;
$h_k$ eine Mehrzahl von Leistungswerten ist:
$N_p$ eine Mehrzahl der Mehrzahl $h_k$ ist; und

die Schwerpunktlageschätzung $\dfrac{\sum_{k=1}^{N_p} \tau_k (h_k - \gamma Z)}{\sum_{k=1}^{N_p} (h_k - \gamma Z)}$ ist.

19. Vorrichtung nach Anspruch 12, wobei:

Z die durch Grundrauschen beeinflusste Leistungsschätzung ist;
$\gamma$ der Rauschskalierungsfaktor ist;
$h_k$ eine Mehrzahl von Leistungswerten ist; und
das rauschkorrigierte Leistungsverzögerungsprofil $h_k - \gamma Z$ ist.

20. Vorrichtung nach Anspruch 12, wobei:

$\sigma_Z^2$ die durch Grundrauschen beeinflusste Leistungsschätzung ist;
Z* eine mittlere Leistung einer Mehrzahl von Werten $h_k$ ist;
$\gamma$ der Rauschskalierungsfaktor ist; und

$$\gamma = \frac{Z^*}{\sigma_g^2}.$$

**21.** Vorrichtung nach Anspruch 12, wobei:

$\gamma'$ der Rauschskalierungsfaktor ist;

$$\gamma' = \frac{N_{paths} + \gamma(N_p - N_{paths})}{N_p};$$

$N_p$ eine Mehrzahl von Leistungswerten ist;
$N_{paths}$ eine Anzahl von wahren Pfaden unter den $N_p$ Leistungswerten ist;

$\sigma_g^2$ die durch Grundrauschen beeinflusste Leistungsschätzung ist;
$Z^*$ eine mittlere Leistung einer Mehrzahl von Leistungswerten $N_n$ ist; und

$$\gamma = \frac{Z^*}{\sigma_g^2}.$$

**22.** Vorrichtung nach Anspruch 12, wobei der Verzögerungsschätzer außerdem umfasst:

Mittel zum Bestimmen des Rauschskalierungsfaktors; und
Mittel zum Speichern des Rauschskalierungsfaktors zur Online-Verwendung;
wobei das Mittel zum Bestimmen des Rauschskalierungsfaktors den Rauschskalierungsfaktor offline vor dem Bestimmen des Leistungsverzögerungsprofils, Berechnen des rauschkorrigierten Leistungsverzögerungsprofils und Berechnen der Schwerpunktlageschätzung bestimmt.

## Revendications

**1.** Procédé de détermination d'un profil de retard de puissance à bruit corrigé, le procédé comprenant de :

déterminer un profil de retard de puissance (204) ;
calculer un profil de retard de puissance à bruit corrigé (206) en utilisant une estimation de puissance de bruit de fond polarisé, le profil de retard de puissance et un facteur de mise à l'échelle de bruit ; et **caractérisé par** calculer une estimation de position de centre de gravité (208) en utilisant le profil de retard de puissance à bruit corrigé.

**2.** Procédé selon la revendication 1, dans lequel le facteur de mise à l'échelle de bruit (202) est appliqué à l'estimation de puissance de bruit de fond.

**3.** Procédé selon la revendication 2, dans lequel la facteur de mise à l'échelle de bruit dépend d'une fonction de densité de probabilité.

**4.** Procédé selon la revendication 3, dans lequel le facteur de mise à l'échelle de bruit dépend d'une fonction de densité de probabilité de l'estimation de puissance de bruit de fond polarisée.

**5.** Procédé selon la revendication 1, dans lequel :

l'étape de détermination du profil de retard de puissance comprend d'utiliser une premièrepluralité de valeurs ; et
l'étape de calcul du profil de retard de puissance à bruit corrigé comprend d'utiliser la première pluralité de valeurs et une seconde pluralité de valeurs.

6. Procédé selon la revendication 5, dans lequel :

la première pluralité de valeurs est une pluralité de valeurs de profil de retard de puissance $N_p$ ; et
la seconde pluralité de valeurs est la $N_n$ valeur la plus petite de profil de retard de puissance.

7. Procédé selon la revendication 1, dans lequel :

Z est l'estimation de puissance de bruit de fond polarisée ;
$\Gamma_k$ est un retard temporel ;
$\gamma$ est le facteur de mise à l'échelle de bruit ;
$h_k$ est une pluralité de valeurs de puissance ;
$N_p$ est une pluralité de la pluralité de valeurs de puissance $h_k$ ; et
l'estimation de position de centre de gravité est

$$\frac{\sum_{k=1}^{N_p} \tau_k (h_k - \gamma Z)}{\sum_{k=1}^{N_p} (h_k - \gamma Z)}.$$

8. Procédé selon la revendication 1, dans lequel :

Z est l'estimation de puissance de bruit de fond polarisée ;
$\gamma$ est le facteur de mise à l'échelle de bruit ;
$h_k$ est une pluralité de valeurs de puissance ; et
le profil de retard de puissance à bruit corrigé est $h_k - Y_Z$.

9. Procédé selon la revendication 1, dans lequel :

$\sigma^2_g$ est l'estimation de puissance de bruit de fond polarisée ;
$Z^*$ est une puissance moyenne d'une pluralité de valeurs $h_k$ ;
Y est le facteur de mise à l'échelle de bruit ; et

$$\gamma = \frac{Z^*}{\sigma^2_g}.$$

10. Procédé selon la revendication 1, dans lequel :

$\gamma'$ est le facteur de mise à l'échelle de bruit ;

$$\gamma' = \frac{N_{paths} + \gamma(N_p - N_{paths})}{N_p};$$

$N_p$ est une pluralité de valeurs de puissance ;
$N_{paths}$ est un nombre de conduits réels parmi la pluralité de $N_p$ valeurs de puissance ;
$\sigma^2_g$ est l'estimation de puissance de bruit de fond polarisée ;
$Z^*$ est une puissance moyenne d'une pluralité de valeurs de puissance $N_n$ ; et

$$\gamma = \frac{Z^{\bullet}}{\sigma_g^2}.$$

**11.** Procédé selon la revendication 1, comprenant en outre de :

déterminer le facteur de mise à l'échelle de bruit ;
mémoriser le facteur de mise à l'échelle de bruit pour une utilisation en ligne ; et
dans lequel l'étape de détermination du facteur de mise à l'échelle de bruit est effectuée hors ligne et avant les étapes de détermination du profil de retard de puissance, calcul du profil de retard de puissance à bruit corrigé et calcul de l'estimation de position de centre de gravité.

**12.** Dispositif de détermination d'un profil de retard de puissance à bruit corrigé, le dispositif comprenant :

un estimateur de canal (104) ;
undésétaleur (106) ; et
un estimateur de retard (102) connecté interopérationnellement à l'estimateur de canal et au désétaleur, l'estimateur de retard :

déterminant un profil de retard de puissance (204) ;
calculant un profil de retard de puissance à bruit corrigé (206) en utilisant une estimation de puissance de bruit de fond polarisée, le profil de retard de puissance et un facteur de mise à l'échelle de bruit ; et
**caractérisé par**
calculant une estimation de position de centre de gravité (208) en utilisant le profil de retard de puissance à bruit corrigé.

**13.** Dispositif selon la revendication 12, dans lequel le facteur de mise à l'échelle de bruit (202) est appliqué à l'estimation de puissance de bruit de fond polarisée.

**14.** Dispositif selon la revendication 13, dans lequel le facteur de mise à l'échelle de bruit dépend d'une fonction de densité de probabilité.

**15.** Dispositif selon la revendication 14, dans lequel le facteur de mise à l'échelle de bruit dépend d'une fonction de densité de probabilité de l'estimation de puissance de bruit de fond polarisée.

**16.** Dispositif selon la revendication 12, dans lequel :

l'estimateur de retard utilise une première pluralité de valeurs pour déterminer le profil de retard de puissance ; et l'estimateur de retard utilise la premièrepluralité de valeurs et une seconde pluralité de valeurs pour calculer le profil de retard de puissance à bruit corrigé.

**17.** Dispositif selon la revendication 16, dans lequel :

lapremièrepluralité de valeurs est une pluralité de valeurs de profil de retard de puissance $N_p$ ; et la seconde pluralité de valeurs est la $N_n$ valeur la plus petite de profil de retard de puissance.

**18.** Dispositif selon la revendication 12, dans lequel :

Z est l'estimation de puissance de bruit de fond polarisée ;
$\Gamma_k$ est un retard temporel ;
$\gamma$ est le facteur de mise à l'échelle de bruit ;
$h_k$ est une pluralité de valeurs de puissance ;
$N_p$ est une pluralité de la pluralité de valeurs de puissance $h_k$ ; et
l'estimation de position de centre de gravité est

$$\frac{\sum_{k=1}^{N_p} \tau_k (h_k - \gamma Z)}{\sum_{k=1}^{N_p} (h_k - \gamma Z)}.$$

**19.** Dispositif selon la revendication 12, dans lequel :

$Z$ est l'estimation de puissance de bruit de fond polarisée ;
$\gamma$ est le facteur de mise à l'échelle de bruit ;
$h_k$ est une pluralité de valeurs de puissance ; et
le profil de retard de puissance à bruit corrigé est $h_k - \gamma_Z$.

**20.** Dispositif selon la revendication 12, dans lequel :

$\sigma^2_g$ est l'estimation de puissance de bruit de fond polarisée ;
$Z^*$ est une puissance moyenne d'une pluralité de valeurs $h_k$ ;
$Y$ est le facteur de mise à l'échelle de bruit ; et

$$\gamma = \frac{Z^*}{\sigma_g^2}.$$

**21.** Dispositif selon la revendication 12, dans lequel :

$\gamma'$ est le facteur de mise à l'échelle de bruit ;

$$\gamma' = \frac{N_{paths} + \gamma(N_p - N_{paths})}{N_p};$$

$N_p$ est une pluralité de valeurs de puissance ;
$N_{paths}$ est un nombre de conduits réels parmi la pluralité de $N_p$ valeurs de puissance ;
$\sigma^2_g$ est l'estimation de puissance de bruit de fond polarisée ;
$Z^*$ est une puissance moyenne d'une pluralité de valeurs de puissance $N_n$ ; et

$$\gamma = \frac{Z^*}{\sigma_g^2}.$$

**22.** Dispositif selon la revendication 12, dans lequel l'estimateur de délai inclut aussi :

un moyen de détermination du facteur de mise à l'échelle de bruit ; et
un moyen de mémorisation du facteur de mise à l'échelle de bruit pour une utilisation en ligne ;
dans lequel le moyen de détermination du facteur de mise à l'échelle de bruit détermine le facteur de mise à l'échelle de bruit hors ligne avant de déterminer le profil de retard de puissance, calculer le profil de retard de puissance à bruit corrigé et calculer l'estimation de position de centre de gravité.

FIG. 1

FIG. 2

*FIG. 3*

**EP 1 704 652 B1**

## REFERENCES CITED IN THE DESCRIPTION

### Patent documents cited in the description

- EP 1065801 A
- EP 1276248 A